# EUROPEAN PATENT SPECIFICATION

(11) **EP 2 868 509 B1**
(45) Date of publication and mention of the grant of the patent: **12.10.2016**
(21) Application number: 14190733.7
(22) Date of filing: 28.10.2014
(51) Int. Cl.: B60K 15/063

(54) **Access ports for accessing covered fuel tanks of a work vehicle**
Zugangsöffnungen für Zugriff auf bedeckte Kraftstofftanks eines Arbeitsfahrzeugs
Orifices d'accès permettant d'accéder à des réservoirs de carburant couverts d'un véhicule de travail

(30) Priority: 01.11.2013 US 201361898962 P
(43) Date of publication of application: 06.05.2015
(73) Proprietor: CNH Industrial Italia S.p.A., 10135 Torino (IT)
(72) Inventor: Solberg, Kent, Woodstock, IL 60098 (US); Fiorati, Stefano, 45030 Occhiobello (Rovigo) (IT); Jackson, Dwayne St. George, Plainfield, IL 60585 (US); Richard, Aaron, Berwyn, IL 60402 (US)
(74) Representative: CNH Industrial IP Department

(56) References cited:
- EP-A1- 2 116 702
- JP-A- 2001 239 956
- US-A- 5 975 574
- US-A1- 2008 115 998
- US-A1- 2010 078 244
- US-A1- 2011 140 483
- US-A1- 2014 061 266
- US-A1- 2014 069 972

## Description

### FIELD OF THE INVENTION

The present subject matter relates generally to work vehicles and, more particularly, to access ports for accessing the covered fuel tanks of a work vehicle.

### BACKGROUND OF THE INVENTION

Work vehicles, such as agricultural tractors, earth-moving vehicles and other vehicles, typically include one or more fuel tanks configured to hold fuel for powering the engine. When designing a work vehicle, it is often desirable to hide the vehicle's fuel tank(s) from view for aesthetic purposes. In addition, it may be desirable to provide a protecting covering(s) for a fuel tank(s) in order to prevent damage to the tank(s). However, while fuel tank coverings may serve aesthetic and/or protective purposes, such coverings also serve to limit operator access to the fuel tank(s). US 2008/011 5 998 describes a bus comprising:
- a cab ;
- seven fuel tanks coupled to the cab
- a cab housing configured to cover the at least one fuel tank 40, 42), the cab housing defining at least one access port configured to provide access to the at least one fuel tank ; and
- at least one cover panel configured to be coupled to the cab housing (60) so as to cover the at least one access port.
JP2001239956 discloses a roof rail that support heavy cargo, such as energy cylinders which are covered. US2010/0078244 disclose a pickup truck with CNG storage tanks between the cab and the bed.

Accordingly, a fuel tank covering or housing that provides an operator with proper access to the fuel tank(s) located underneath would be welcomed in the technology.

### BRIEF DESCRIPTION OF THE INVENTION

Aspects and advantages of the invention will be set forth in part in the following description, or may be obvious from the description, or may be learned through practice of the invention.

In one aspect, the present subject matter is directed to a work vehicle including a cab and a fuel tank coupled to the cab. The work vehicle may also include a cab housing configured to cover the fuel tank. The cab housing may define an access port configured to provide access to the fuel tank. In addition, the work vehicle may include a cover panel configured to be coupled to the cab housing so as to cover the access port.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a left side view of one embodiment of a work vehicle in accordance with aspects of the present subject matter;
FIG. 2 illustrates a left, rear perspective view of the work vehicle shown in FIG. 1;
FIG. 3 illustrates a right, front perspective view of the work vehicle shown in FIG. 1;
FIG. 4 illustrates a rear view of the work vehicle shown in FIG. 1;
FIG. 5 illustrates another left, rear perspective view of the work vehicle shown in FIG. 1;
FIG. 6 illustrates a right, rear perspective view of the work vehicle shown in FIG. 1;
FIG. 7 illustrates a left, rear perspective view of a portion of the work vehicle shown in FIG. 1, particularly illustrating a plurality of fuel tanks mounted to the rear of an operator's cab of the work vehicle;
FIG. 8 illustrates a left side view of a portion of the work vehicle shown in FIG. 1, particularly illustrating a portion of the left side of a housing that covers the fuel tanks coupled to the rear of the operator's cab;
FIG. 9 illustrates another left side view of the portion of the work vehicle shown in FIG. 8, particularly illustrating a panel of the housing removed so as to provide an access port for accessing the fuel tank coupled to the left rear of the operator's cab;
FIG. 10 illustrates a right side view of a portion of the work vehicle shown in FIG. 1, particularly illustrating a portion of the right side of the housing that covers the fuel tanks coupled to the rear of the operator's cab;
FIG. 11 illustrates another right side view of the portion of the work vehicle shown in FIG. 10, particularly illustrating a panel of the housing removed so as to provide an access port for accessing the fuel tank coupled to the right rear of the operator's cab;
FIG. 12 illustrates a right, rear perspective view of a portion of the work vehicle shown in FIG. 1, particularly illustrating a portion of the rear of the housing that covers the fuel tanks coupled to the rear of the operator's cab;
FIG. 13 illustrates another right, rear perspective view of the portion of the work vehicle shown in FIG. 12, particularly illustrating a panel of the housing removed so as to provide an access port for accessing the fuel tank coupled to the top rear of the operator's cab; and
FIG. 14 illustrates a partial perspective view of a portion of the work vehicle shown in FIG. 1, particularly illustrating a transparent view of a side housing of the work vehicle to allow the fuel tanks covered by the housing to be viewed.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

In general, the present subject matter is directed to access ports for accessing one or more covered fuel tanks of a work vehicle. Specifically, in several embodiments, the work vehicle may include one or more housings configured to cover one or more fuel tanks mounted to portions of the vehicle. Each housing may define one or more access ports for accessing the fuel tank(s) disposed underneath such housing. Additionally, each housing may include one or more cover panels configured to cover the access port(s). For example, each cover panel may be removably or hingedly coupled to the housing at one of the access ports so that the panel may be removed or otherwise moved away from the access port when access to the fuel tank(s) is needed.

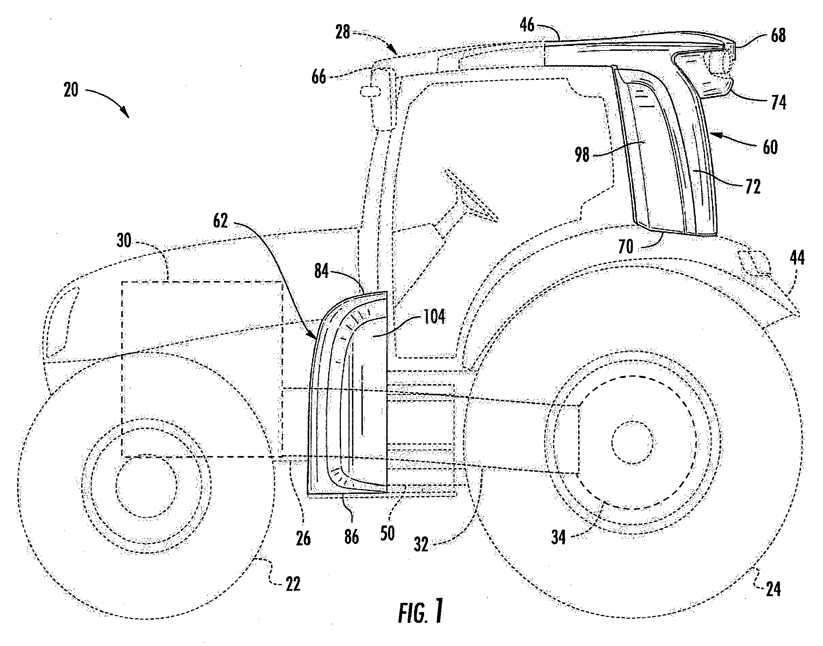

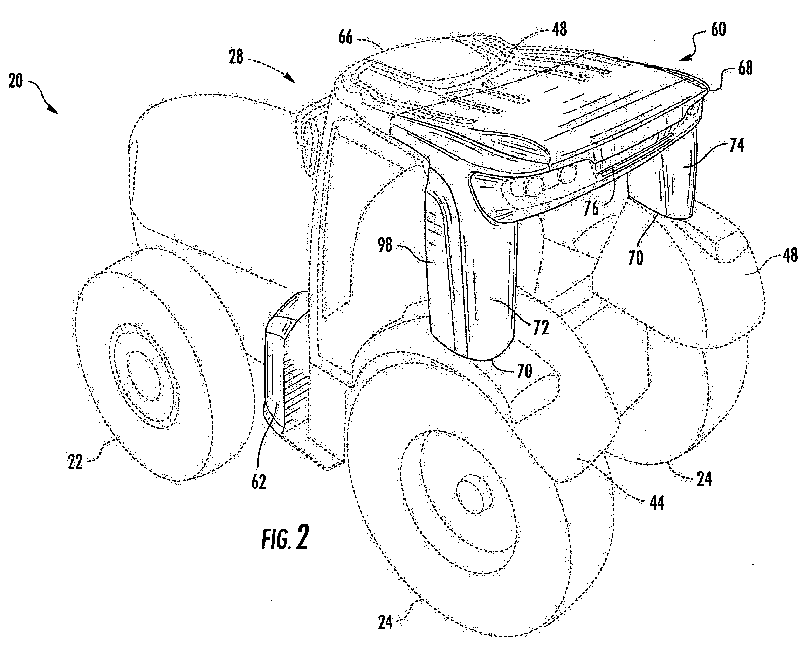

Referring now to the drawings, FIGS. 1-7 illustrate various views of one embodiment of a work vehicle 20. As shown, the work vehicle 20 is configured as an agricultural tractor. However, in other embodiments, the work vehicle 20 may be configured as any other suitable work vehicle known in the art, such as various other agricultural vehicles, earth-moving vehicles, loaders and/or various other off-road vehicles.

As shown in the illustrated embodiment, the work vehicle 20 includes a pair of front wheels 22, a pair or rear wheels 24 and a chassis 26 coupled to and supported by the wheels 22, 24. An operator's cab 28 may be supported by a portion of the chassis 26 and may house various control or input devices (not shown) for permitting an operator to control the operation of the work vehicle 20. Moreover, the work vehicle 20 may include an engine 30 (FIG. 1) and a transmission 32 (FIG. 1) mounted on the chassis 26. The transmission 32 may be operably coupled to the engine 30 and may provide variably adjusted gear ratios for transferring engine power to the wheels 24 via an axle/differential 34 (FIG. 1).

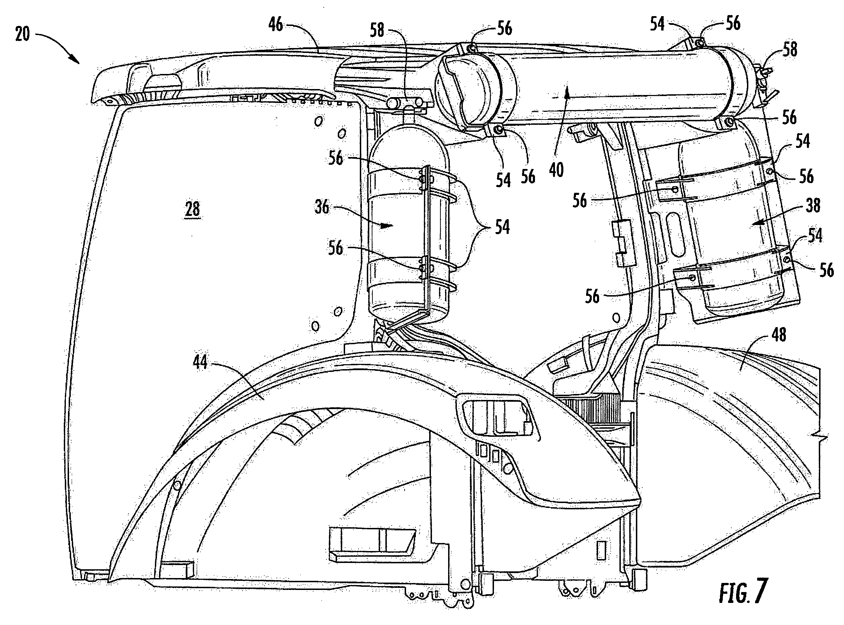

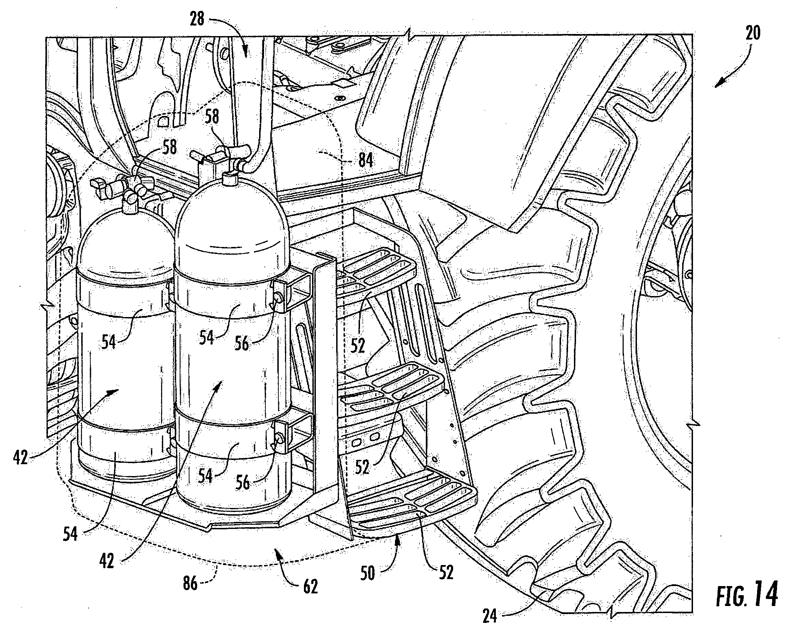

As is generally understood, the work vehicle 20 may also include or more fuel tanks 36, 38, 40, 42 for containing fuel configured to be supplied to the engine 30 or any other suitable component of the vehicle 20. In several embodiments, the fuel tanks 36, 38, 40, 42 may be configured to contain a pressurized or compressed fuel, such as methane or natural gas, hydrogen and/or any other suitable fuels. For example, as particularly shown in FIGS. 7 and 14, each fuel tank 36, 38, 40, 42 may correspond to a pressure vessel (e.g., a pressurized fluid cylinder) for containing the pressurized or compressed fuel. Alternatively, the fuel tanks 36, 38, 40, 42 may be configured to contain non-pressurized fuel, such as gasoline or diesel fuel. In such embodiments, the fuel tanks 36, 38, 40, 42 may generally have any suitable configuration that allows the fuel to be contained therein.

As shown in FIG. 7, in several embodiments, one or more of the fuel tanks 36, 38, 40 may be coupled to the rear of the cab 28. Specifically, as shown, a first fuel tank 36 is coupled to the left, rear of the cab 28 and extends vertically from generally adjacent to a left tire well 44 of the work vehicle 10 to generally adjacent to a top 46 of the cab 28. Additionally, a second fuel tank 38 is coupled to the right, rear of the cab 28 and extends vertically from generally adjacent to a right tire well 48 of the work vehicle 10 to generally adjacent to the top 46 of the cab 28. Moreover, a third fuel tank 40 is coupled to the rear of the cab 28 and extends horizontally generally adjacent to the top 46 of the cab 18 between the first and second fuel tanks 36, 38. In other embodiments, it should be appreciated that any other suitable number of fuel tanks may be coupled to and/or disposed adjacent to the rear of the cab 28, such as less than three fuel tanks or greater than the three fuel tanks.

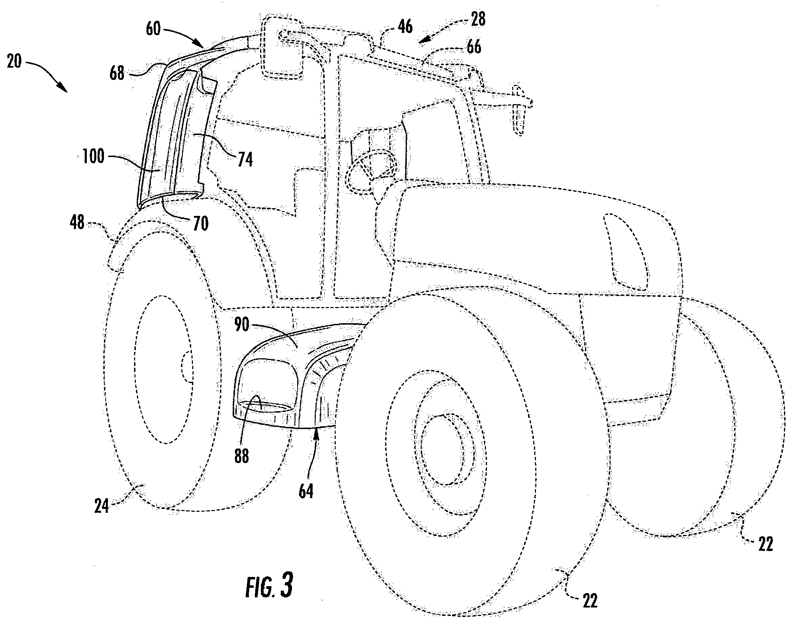

In addition, the work vehicle 20 may also include one or more fuel tanks 42 located along one or both of the sides of the vehicle 20. For example, as shown in FIG. 14, two side tanks 42 are located along the left side of the work vehicle 20 at a location adjacent to a cab ladder 50 defining steps 52 configured to provide an operator access to the left side of the cab 28. Although not shown, one or more fuel tanks may also be located on the right side of the work vehicle 20, such as at the location of the side housing 64 (FIG. 3) positioned on the right side of the vehicle 20.

It should be appreciated that, in other embodiments, the various fuel tanks 36, 38, 40, 42 of the work vehicle 20 may be located at any other suitable location on and/or along the vehicle 20.

Additionally, the fuel tanks 36, 38, 40, 42 may generally be configured to be coupled to portions of the work vehicle 20 at their respective positions using any suitable attachments means and/or method known in the art. For example, as shown in FIG. 7, the fuel tanks 36, 38, 40 are coupled to the rear of the cab 28 via suitable brackets 54 and mechanical fasteners 56. Similarly, as shown in FIG. 14, the side fuel tanks 42 are coupled to a portion of the work vehicle 20 adjacent to the cab ladder 50 using suitable brackets 54 and mechanical fasteners 56. In other embodiments, the fuel tanks 36, 38, 40, 42 may be coupled to the work vehicle 20 at their respective positions using any other suitable attachments means.

It should be appreciated that, in embodiments in which the fuel tanks 36, 38, 40, 42 are configured as pressurized vessels, each tank 36, 38, 40, 42 may include a valve(s) 58 for opening/closing the tank 36, 38, 40, 42, thereby allowing the supply of fuel from each tank 36, 38, 40, 42 to be turned on and off. For example, as shown in FIGS. 7 and 14, each tank 36, 38, 40, 42 may include a tank valve 58 located at one end of the tank 36, 38, 40, 42. In such embodiments, the valve 58 may be configured to be manually opened and closed (e.g., a wheel valve) or automatically opened and closed (e.g., an electronically operated valve controlled via a controller of the vehicle 20). Alternatively, in embodiments in which the fuel tanks 36, 38, 40, 42 are configured to contain non-pressurized fuel, each fuel tank 36, 38, 40, 42 may include a fuel cap as opposed to the tank valve to allow the fuel tank 36, 38, 40, 42 to be opened and closed.

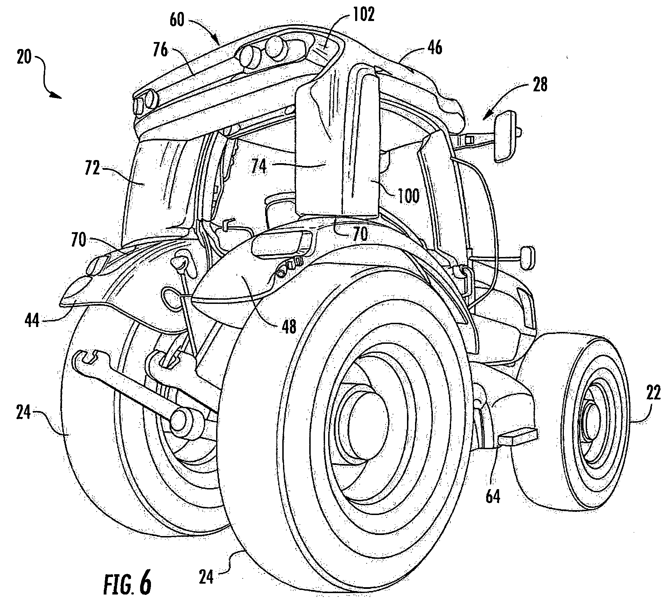

Moreover, the work vehicle 20 may also include one or more housings 60, 62, 64 configured to partially or fully encase, surround and/or otherwise cover the fuel tanks 36, 38, 40, 42. For example, as shown in the illustrated embodiments, the work vehicle 20 includes a cab housing 60 configured to cover the fuel tanks 36, 38, 40 coupled to the rear of the cab 28. Additionally, the work vehicle 20 may include a side housing(s) 62, 64 for covering any fuel tanks 42 located along the side of the work vehicle 20. For example, as shown in FIGS. 1, 2, 5 and 14, the work vehicle 20 includes a first side housing 62 (shown as being transparent in FIG. 14) for covering the side tanks 42 located along the left side of the work vehicle 20. Similarly, as shown in FIGS. 3 and 6, the work vehicle 20 may also include a second side housing 64 for covering any side tanks (not shown) located along the right side of the work vehicle 20. It should be appreciated that the various housings 60, 62, 64 may be configured to serve as protective coverings for the fuel tanks 36, 38, 40, 42.
In addition, the housings 60, 62, 64 may also be configured to enhance the overall look, feel and/or design of the work vehicle 20. For instance, as opposed to simply mounting the fuel tanks 36, 38, 40, 42 to the exterior of the vehicle 20, the housings 60, 62, 64 may provide a more aesthetically pleasing look to the vehicle's exterior.

In several embodiments, the cab housing 60 may form all or a part of the housing component(s) that are configured to house and/or cover the various structural members and/or interior components of the cab 28. For example, as shown in the illustrated embodiment, the cab housing 60 may be configured to extend horizontally along the top 46 of the cab 28 between a front end 66 disposed at the front the cab 28 and a rear end 68 disposed at the rear of the cab 28. Additionally, the cab housing 60 may be configured to extend vertically along the rear of the cab 28 between the rear end 68 and a bottom end 70 located generally adjacent to the tire wells 44, 46. In such an embodiment, the cab housing 60 may be formed from multiple housing components configured to be coupled together or from a single housing component. Alternatively, the cab housing 60 described herein may simply be configured to correspond to the portion of the vehicle housing component(s) that extend around and/or cover the various fuel tanks 36, 38, 40 mounted at the rear of the cab 28.

In several embodiments, the cab housing 60 may include a first housing portion 72 configured to extend vertically along the left, rear of the cab 28 so as to fully or partially surround and/or cover the first fuel tank 36. Specifically, as shown in the illustrated embodiment, the first housing portion 72 generally extends vertically between the rear and bottom ends 68, 78 of the cab housing 60 along the left, rear side of the cab 28. Additionally, the cab housing 60 may include a second housing portion 74 configured to extend vertically along the right, rear of the cab 28 so as to fully or partially surround and/or cover the second fuel tank 38. For example, as shown in the illustrated embodiment, the second housing portion 74 generally extends vertically between the rear and bottom ends 68, 78 of the cab housing 60 along the right, rear side of the cab 28. Moreover, the cab housing 60 may include a third housing portion 76 extending horizontally along the top, rear of the cab 28 so as to fully or partially surround and/or cover the third fuel tank 42. For instance, as shown in the illustrated embodiment, the third housing portion 76 generally extends horizontally between the first and second housing portions 72, 74 along the rear end 68 of the cab housing 60.

As indicated above, in several embodiments, the cab housing 60 may be formed from multiple housing components or from a single housing component. Thus, it should be appreciated that the first, second and third housing portions 72, 74, 76 may be formed as separate components (e.g., separate housing panels) configured to be separately attached to one another. Alternatively, the first, second and third housing portions 72, 74, 76 may be formed integrally as a single component (e.g., a single molded housing component).

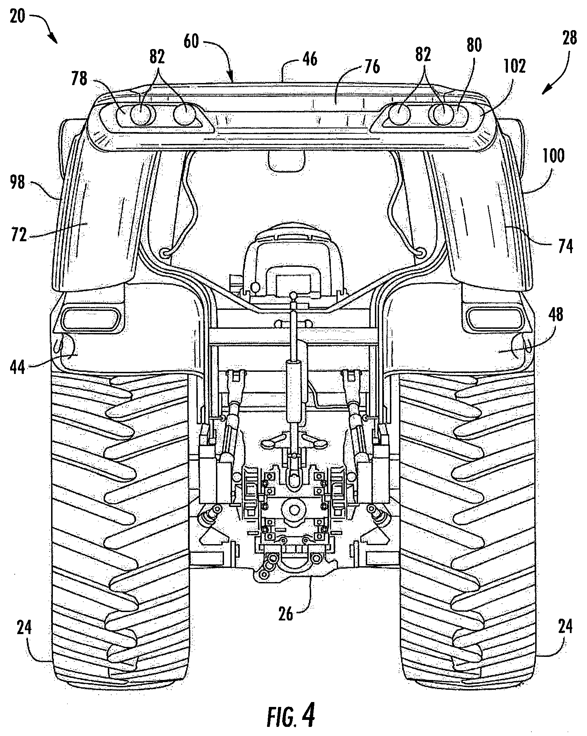

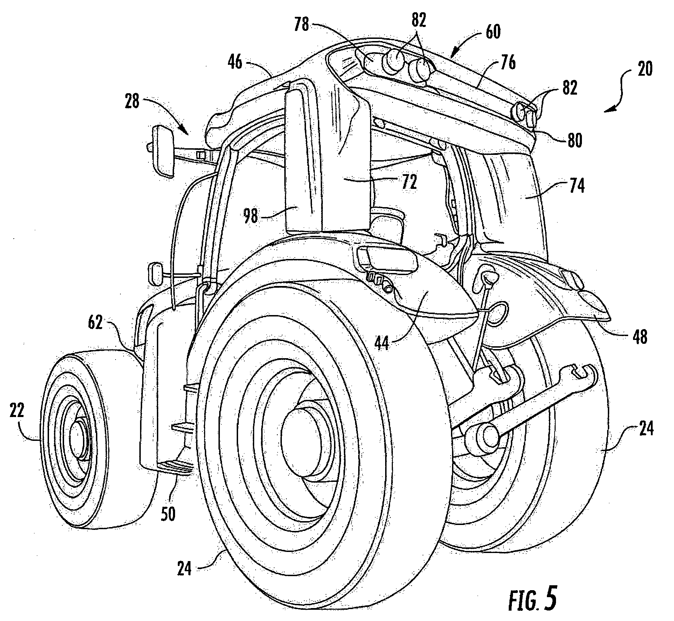

Additionally, in several embodiments, the third housing portion 76 may configured to accommodate one or more lighting components of the work vehicle 20. For example, as shown in FIGS. 4 and 5, the third housing portion 76 may define a first recess 78 located adjacent to the left side of the cab housing 60 and a second recess 80 located adjacent to the right side of the cab housing 60. In such an embodiment, one or more lights or lighting modules 82 may be configured to be mounted to the cab housing 60 within each recess 78, 80.

Moreover, it should be appreciated that the side housing(s) 62, 64 of the work vehicle 20 may also have any suitable configuration that allows such housing(s) 62, 64 to at least partially surround and/or cover any side fuel tanks 42 of the vehicle 20. For example, as shown in FIGS 1 and 14, the first side housing 62 may be configured as an elongated cover extending lengthwise between a first end 84 and a second end 86 so as to define a height sufficient to allow one or more side tanks 42 to be positioned within the housing 62 along the left side of the work vehicle 20. Similarly, the second side housing 64 may be configured to define any suitable dimension(s) that allows the housing 64 to at least partially surround and/or cover any side fuel tanks 42 located along the right side of the work vehicle 20.

In one embodiment, the second side housing 64 may also be configured to serve as ladder to allow an operator to gain access to the right side of the cab 28. Specifically, as shown in FIG. 3, the second side housing 64 may define one or more steps 88 that may be used by an operator to move from the ground to a top side 90 of the housing 64 in order to access the right side of the cab 28.

Moreover, in several embodiments, the housing(s) 60, 62, 64 may define one or more access ports 92, 94, 96 to allow an operator to access the fuel tank(s) 36, 38, 40, 42 located underneath each housing 60, 62, 64. For example, an operator may be required to access the fuel tank(s) 36, 38, 40, 42 in order to manipulate the tank valve 58 (or fuel cap) associated with each tank 36, 38, 40, 42, to clean the fuel tanks 36, 38, 40, 42 and/or to perform any other suitable maintenance and/or service operation(s). Additionally, in such embodiments, the work vehicle 20 may also include one or more cover panels 98, 100, 102 configured to cover the access ports 92, 94, 96 when operator access to the fuel tank(s) 36, 38, 40, 42 is not required.

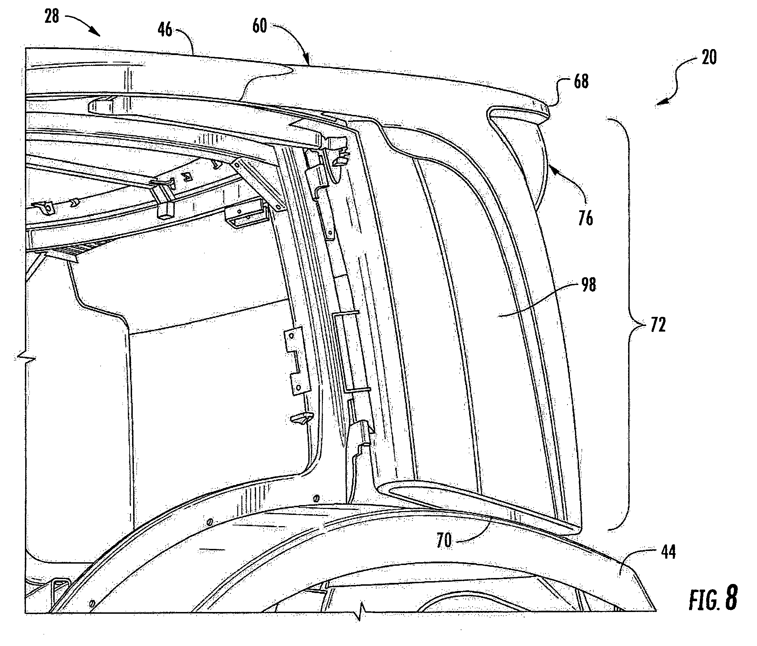

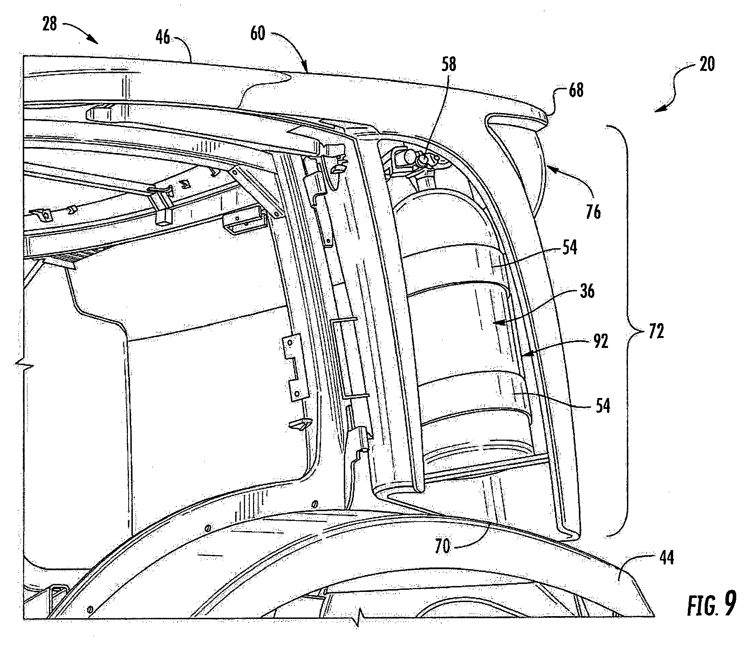

For example, FIGS. 8 and 9 illustrate a left side view of a portion of the work vehicle 20 shown in FIGS. 1-7, particularly illustrating a side view of the first housing portion 72 of the cab housing 60. As particularly shown in FIG. 9, the first housing portion 72 may be configured to define a first access port 92 extending along the left side of the cab housing 60 in order to provide access to the first fuel tank 36 disposed therein. Additionally, as shown in FIG. 8, a first cover panel 98 may be configured to be coupled to the cab housing 60 so as to extend over and/or cover the first access port 92. Thus, when access to the first fuel tank 36 is required, the first cover panel 98 may be removed or otherwise moved away from the first access port 92 to allow access within the first housing portion 72.

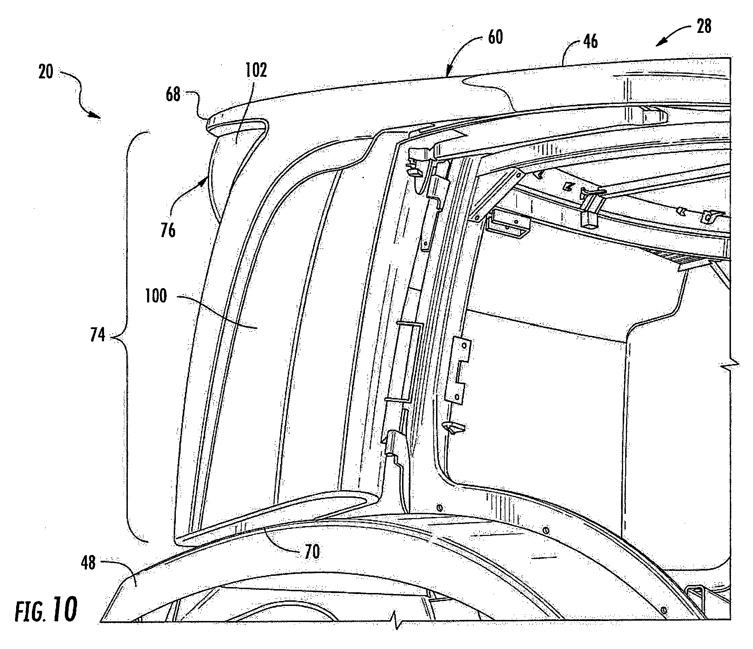

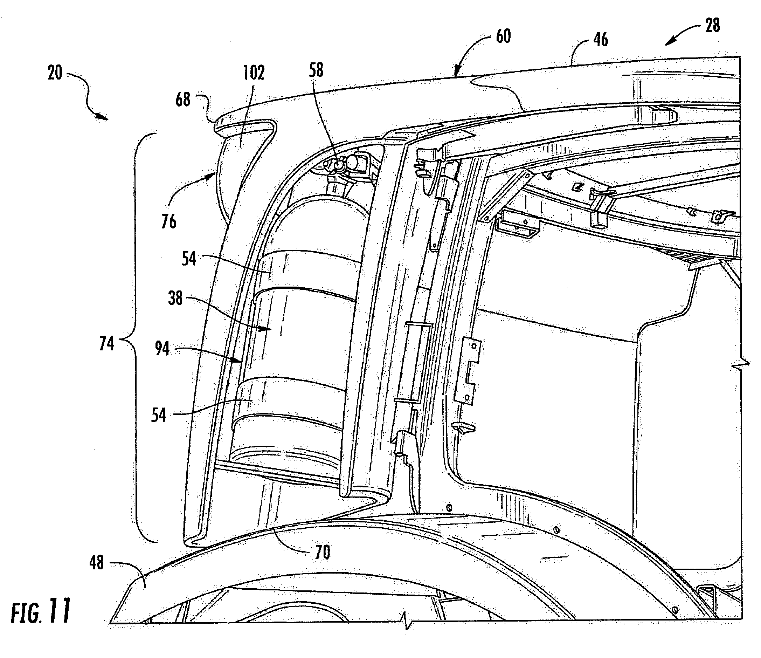

Similarly, FIGS. 10 and 11 illustrate a right side view of a portion of the work vehicle 20 shown in FIGS. 1-7, particularly illustrating a side view of the second housing portion 74 of the cab housing 60. As particularly shown in FIG. 11, the second housing portion 74 may be configured to define a second access port 94 extending along the right side of the cab housing 60 in order to provide access to the second fuel tank 38 disposed therein. Additionally, as shown in FIG. 10, a second cover panel 100 may be configured to be coupled to the cab housing 60 so as to extend over and/or cover the second access port 94. Thus, when access to the second fuel tank 38 is required, the second cover panel 100 may be removed or otherwise moved away from the second access port 94 to allow access within the second housing portion 74.

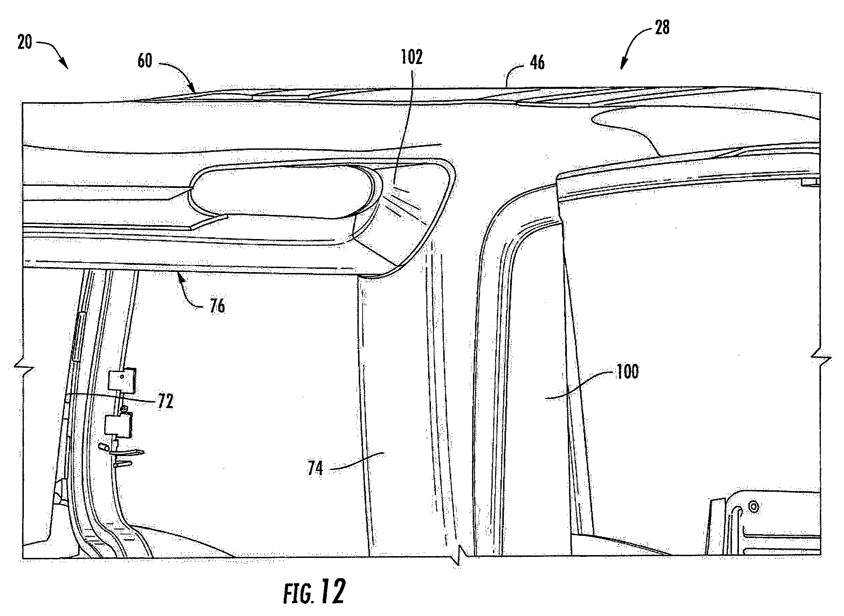

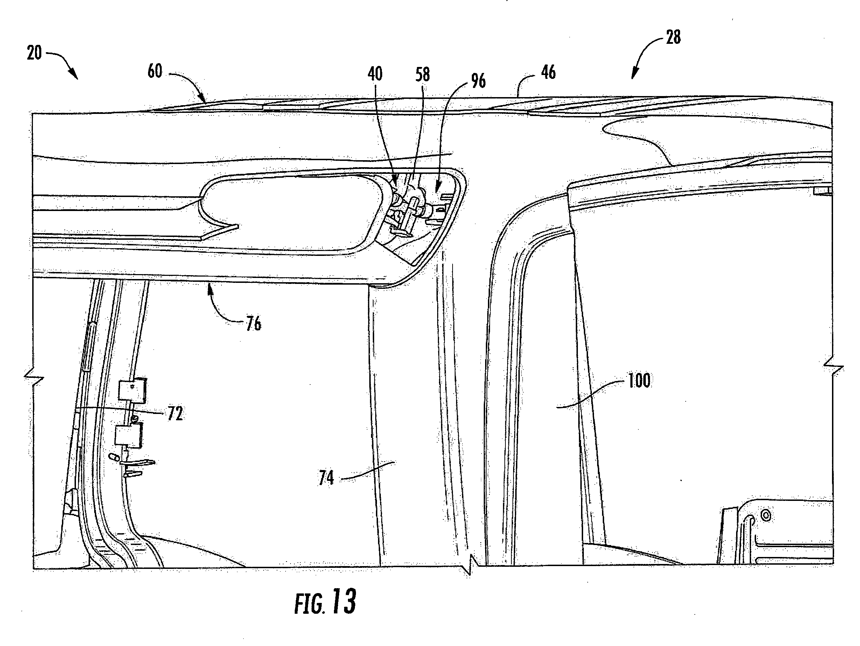

Moreover, FIGS. 12 and 13 illustrate a right, rear perspective view of a portion of the work vehicle 20 shown in FIGS. 1-7, particularly illustrating a perspective view of the right side of the third housing portion 76 of the cab housing 60. As particularly shown in FIG. 13, the third housing portion 76 may be configured to define a third access port 96 at the top, right side of the cab housing 60 in order to provide access to the third fuel tank 40 disposed therein. Additionally, as shown in FIG. 12, a third cover panel 102 may be configured to be coupled to the cab housing 60 so as to extend over and/or cover third access port 96. Thus, when access to the third fuel tank 40 is required, the third cover panel 102 may be removed or otherwise moved away from the third access port 96 to allow access within the third housing portion 76.

It should be appreciated that the particular size of each access port 92, 94, 96 may generally vary depending on the amount of access to be provided to an operator. For example, as shown in FIGS. 9 and 11, in one embodiment, each access port 92, 94, 96 may be large enough to access all or a significant portion of the corresponding fuel tank 36, 38, 40. However, as shown in FIG. 13, in another embodiment, each access port 92, 94, 96 may only be configured to allow access to a small portion of the corresponding fuel tank 36, 38, 40, such as by providing access to the tank valve 58 associated with the fuel tank.

It should also be appreciated that the access ports 92, 94, 96 may generally be defined at any suitable location within the cab housing 60 that provides access to the fuel tank(s) 36, 38, 40 covered by the housing 60. For example, instead of being defined along the outer sides of the first and second housing portions 72, 74, the first and second access ports 92, 94 may be defined at any other suitable location(s), such as at the rear of each housing portion 72, 74 or along the inner side of each housing portion 72, 74 (e.g., the side facing the opposite housing portion 72, 74). Similarly, instead of being defined at the right side of the third housing portion 76, the third access port 96 may be defined at any other suitable location, such as at the left side of third housing portion 76 or along the rear face of the housing portion 76 (e.g., along all or a portion of the face along which the lighting recesses 78, 80 are defined).

It should also be appreciated that the cover panels 98, 100, 102 may generally be configured to be coupled to the cab housing 60 using any suitable means that allows each panel 98, 100, 102 to be moved relative to the cab housing 60 in order to allow access to its corresponding access port 92, 94, 96. For example, in several embodiments, the cover panels 98, 100, 102 may be configured to be removably coupled to the cab housing 60 at the location of each access port 92, 94, 96. For instance, suitable fastening mechanisms, such as fasteners, clips, brackets and/or the like, may be used to couple the cover panels 98, 100, 102 to the cab housing 60. In such an embodiment, the fastening mechanisms may be removed, loosened or otherwise manipulated to allow each cover panel 98, 100, 102 to be removed from the cab housing 60 in order to expose the underlying access port 92, 94, 96. In another embodiment, the cover panels 98, 100, 102 may simply be configured to be inserted into and removed from each access port 92, 94, 96. For instance, each cover panel 98, 100, 102 may be dimensioned such that, when the cover panel 98, 100, 102 is pushed into its corresponding access port 92, 94, 96, the cover panel 98, 100, 102 is retained within access port 92, 94, 96 via contact and/or engagement with the cab housing 60 and/or a component coupled to the cab housing 60 (e.g., a retaining clip or other feature).

Alternatively, the cover panel 98, 100, 102 may be configured to be hingedly coupled to the cab housing 60 at the location of each access port 92, 94, 96. For example, each cover panel 98, 100, 102 may be coupled to the cab housing 60 using a hinge or any other suitable type of hinged or pivoting attachment mechanism. In such an embodiment, each cover panel 98, 100, 102 may be pivoted or otherwise moved relative to the cab housing 60 to allow access to the fuel tank(s) 36, 38, 40 via the corresponding access port 92, 94, 96.

Additionally, it should be appreciated that similar access ports may also be defined in the side housing(s) 62, 64 to allow access to the interior of such housing(s) 62, 64. For example, as shown in FIG. 1, a side cover panel 104 may be coupled to the first side housing 62 to allow access to the side fuel tank(s) 42 contained therein. Similarly, a side cover panel (not shown) may also be coupled to the second side housing 64 to allow access to any side fuel tanks 42 contained therein.

It should also be appreciated that the configuration of the work vehicle 20 described above and shown in the illustrated embodiment is provided only to place the present subject matter in an exemplary field of use. Thus, it should be appreciated that the present subject matter may be readily adaptable to any manner of work vehicle configuration. For example, the disclosed fuel tanks 36, 38, 40, 42, housings 60, 62, 64, access ports 92, 94, 96, cover panels 98, 100, 102, 104 and/or any combination thereof may be provided on any other agricultural vehicle(s) and/or any other suitable type of work vehicle(s), such as earth-moving vehicles, loaders and/or various other off-road vehicles.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A work vehicle (20), comprising:
- a cab (28);
- at least one fuel tank (36, 38 40, 42) coupled to the cab (28); wherein the at least one fuel tank (36, 38, 40) comprises a first fuel tank (36), a second fuel tank (38) and a third fuel tank (40), the first, second and third fuel tanks being coupled to the cab (28)
- a cab housing (60) including a first housing portion (72) extending between a top of the cab (28) and a left tire well (44) of the work vehicle (20), a second housing portion (74) extending between the top of the cab (28) and a right tire well (48) of the work vehicle (20) and a third housing portion (76) extending between the first and second housing portions (72, 74) and configured to cover the at least one fuel tank (36, 38, 40), the cab housing (60) defining at least one access port (92, 94, 96) configured to provide access to the at least one fuel tank (36, 38, 40); and
- at least one cover panel (98, 100, 102) configured to be coupled to the cab housing (60) so as to cover the at least one access port (92, 94, 96).

2. The work vehicle (20) of claim 1, wherein the at least one fuel tank (36, 38, 40, 42) is coupled to a rear of the cab (28).

3. The work vehicle (20) of claim 1, wherein the at least one cover panel (98, 100, 102) is removably coupled to the cab housing (60).

4. The work vehicle (20) of claim 1, wherein the at least one cover panel (98, 100, 102) is hingedly coupled to the cab housing (60).

5. The work vehicle (20) of claim 1, wherein the first housing portion (72) is configured to at least partially cover the first fuel tank (36), the second housing portion (74) is configured to at least partially cover the second fuel tank (38) and the third housing portion (76) is configured to at least partially cover the third fuel tank (40).

6. The work vehicle (20) of claim 5, wherein the at least one access port (92, 94, 96) comprises a first access port (92) defined in the first housing portion (72) to provide access to the first fuel tank (36), a second access port (94) defined in the second housing portion (74) to provide access to the second fuel tank (38) and a third access port (96) defined in the third housing portion (76) to provide access to the third fuel tank (40).

7. The work vehicle (20) of claim 1, wherein the at least one cover panel (98, 100, 102) comprises a first cover panel (98) configured to cover the first access port (92), a second cover panel (100) configured to cover the second access port (94) and a third cover panel (102) configured to cover the third access port (96).

8. The work vehicle (20) of claim 1, further comprising at least one side housing (64) positioned along a side of the work vehicle (20), the at least one side housing (64) configured to cover at least one side fuel tank (42) coupled to the work vehicle (20).

## Patentansprüche

1. Ein Arbeitsfahrzeug (20) mit:
- einer Kabine (28);
- zumindest einem Kraftstofftank (36, 38, 40, 42), der mit der Kabine (28) verbunden ist; wobei der zumindest eine Kraftstofftank (36, 38, 40) einen ersten Kraftstofftank (36), einen zweiten Kraftstofftank (38) und einen dritten Kraftstofftank (40) umfasst, wobei die ersten, zweiten und dritten Kraftstofftanks mit der Kabine (28) verbunden sind;
- einer Kabinenverkleidung (60), die einen ersten Verkleidungsteil (72), der sich zwischen einer Oberseite der Kabine (28) und einem linken Radhaus (44) des Arbeitsfahrzeuges (20) erstreckt, einen zweiten Verkleidungsteil (74), der sich zwischen der Oberseite der Kabine (28) und einem rechten Radhaus (48) des Arbeitsfahrzeuges (20) erstreckt, und einen dritten Verkleidungsteil (76) einschließt, der sich zwischen den ersten und zweiten Verkleidungsteilen (72, 74) erstreckt, und die zur Abdeckung des zumindest einen Kraftstofftanks (36, 38, 40, 42) konfiguriert sind, wobei die Kabinenverkleidung (60) zumindest eine Zugangsöffnung (92, 94, 96) bildet, die zur Bereitstellung eine Zuganges an den zumindest einen Kraftstofftank (36, 38, 40) ausgebildet ist; und
- zumindest eine Abdeckplatte (98, 100, 102), die zur Verbindung mit der Kabinenverkleidung (60) konfiguriert ist, um die zumindest eine Zugangsöffnung (92, 94, 96) abzudecken.

2. Das Arbeitsfahrzeug (20) nach Anspruch 1, bei dem der zumindest eine Kraftstofftank (36, 38, 40, 42) mit der Rückseite der Kabine (28) verbunden ist.

3. Das Arbeitsfahrzeug (20) nach Anspruch 1, bei dem die zumindest eine Abdeckplatte (98, 100, 102) lösbar mit der Kabinenverkleidung (60) verbunden ist.

4. Das Arbeitsfahrzeug (20) nach Anspruch 1, bei dem die zumindest eine Abdeckplatte (98, 100, 102) gelenkig mit der Kabinenverkleidung (60) verbunden ist.

5. Das Arbeitsfahrzeug (20) nach Anspruch 1, bei dem der erste Verkleidungsteil so konfiguriert ist, dass er zumindest teilweise den ersten Kraftstofftank (36) abdeckt, dass der zweite Verkleidungsteil (74) so konfiguriert ist, dass er zumindest teilweise den zweiten Kraftstofftank (38) abdeckt, und dass der dritte Verkleidungsteil (76) so konfiguriert ist, dass er zumindest teilweise den dritten Kraftstofftank (40) abdeckt.

6. Das Arbeitsfahrzeug (20) nach Anspruch 5, bei dem die zumindest eine Zugangsöffnung (92, 94, 96) eine erste Zugangsöffnung (92) umfasst, die in dem ersten Verkleidungsteil (72) ausgebildet ist, um einen Zugang an den ersten Kraftstofftank (36) zu ermöglichen, dass eine zweite Zugangsöffnung (94) in dem zweiten Verkleidungsteil (74) ausgebildet ist, um einen Zugang an den zweiten Kraftstofftank (38) zu schaffen, und dass eine dritte Zugangsöffnung (96) in dem dritten Verkleidungsteil (76) gebildet ist, um einen Zugang an den dritten Kraftstofftank (40) zu schaffen.

7. Das Arbeitsfahrzeug (20) nach Anspruch 1, bei dem die zumindest eine Abdeckplatte (98, 100, 102) eine erste Abdeckplatte (98), die zur Abdeckung der ersten Zugangsöffnung (92) konfiguriert ist, eine zweite Abdeckplatte (100), die zur Abdeckung der zweiten Zugangsöffnung (94) konfiguriert ist, und eine dritte Abdeckplatte (102) umfasst, die zur Abdeckung der dritten Zugangsöffnung (96) konfiguriert ist.

8. Das Arbeitsfahrzeug (20) nach Anspruch 1, das weiterhin zumindest eine Seitenverkleidung (64) umfasst, das entlang einer Seite des Arbeitsfahrzeuges (20) angeordnet ist, wobei die zumindest eine Seitenverkleidung (64) so konfiguriert ist, dass sie zumindest einen Seiten-Kraftstofftank (42) abdeckt, der mit dem Arbeitsfahrzeug (20) verbunden ist.

## Revendications

1. Véhicule de travail (20), comprenant :
- une cabine (28),
- au moins un réservoir de carburant (36, 38 40, 42) accolé à la cabine (28), dans lequel le au moins un réservoir de carburant (36, 38, 40) comprend un premier réservoir de carburant (36), un second réservoir de carburant (38) et un troisième réservoir de carburant (40), les premier, second et troisième réservoirs de carburant étant accolés à la cabine (28),
- un caisson de cabine (60) incluant une première partie de caisson (72) s'étendant entre le haut de la cabine (28) et un passage de roue gauche (44) du véhicule de travail (20), une seconde partie de caisson (74) s'étendant entre le haut de la cabine (28) et un passage de roue droite (48) du véhicule de travail (20) et une troisième partie de caisson (76) s'étendant entre les première et seconde parties de caisson (72, 74) et conçue pour couvrir le au moins un réservoir de carburant (36, 38, 40), le caisson de cabine (60) définissant au moins un orifice d'accès (92, 94, 96) conçu pour procurer un accès au au moins un réservoir de carburant (36, 38, 40), et
- au moins un panneau de protection (98, 100, 102) conçu pour être associé au caisson de cabine (60) de façon à recouvrir le au moins un orifice d'accès (92, 94, 96).

2. Véhicule de travail (20) selon la revendication 1, **caractérisé en ce que** le au moins un réservoir de carburant (36, 38, 40, 42) est couplé à l'arrière de la cabine (28).

3. Véhicule de travail (20) selon la revendication 1, **caractérisé en ce que** le au moins un panneau de protection (98, 100, 102) est couplé de façon amovible au caisson de cabine (60).

4. Véhicule de travail (20) selon la revendication 1, **caractérisé en ce que** le au moins un panneau de protection (98, 100, 102) est relié de façon articulée au caisson de cabine (60).

5. Véhicule de travail (20) selon la revendication 1, **caractérisé en ce que** la première partie de caisson (72) est conçue pour couvrir au moins en partie le premier réservoir de carburant (36), la seconde partie de caisson (74) est conçue pour couvrir au moins en partie le second réservoir de carburant (38) et la troisième partie de caisson (76) est conçue pour couvrir au moins en partie le troisième réservoir de carburant (40).

6. Véhicule de travail (20) selon la revendication 5, **caractérisé en ce que** le au moins un orifice d'accès (92, 94, 96) comprend un premier orifice d'accès (92) défini dans la première partie de caisson (72) pour fournir un accès au premier réservoir de carburant (36), un second orifice d'accès (94) défini dans la seconde partie de caisson (74) pour fournir un accès au second réservoir de carburant (38) et un troisième orifice d'accès (96) défini dans la troisième partie de caisson (76) pour fournir un accès au troisième réservoir de carburant (40).

7. Véhicule de travail (20) selon la revendication 1, **caractérisé en ce que** le au moins un panneau de protection (98, 100, 102) comprend un premier panneau de protection (98) conçu pour couvrir le premier orifice d'accès (92), un second panneau de protection (100) conçu pour couvrir le second orifice d'accès (94) et un troisième panneau de protection (102) conçu pour couvrir le troisième orifice d'accès (96).

8. Véhicule de travail (20) selon la revendication 1, comprenant en plus au moins un caisson latéral (64) positionné le long d'un côté du véhicule de travail (20), le au moins un caisson latéral (64) étant conçu pour couvrir au moins un réservoir de carburant latéral (42) couplé au véhicule de travail (20).
